# EUROPÄISCHE PATENTSCHRIFT

(11) **EP 0 445 406 B1**
(45) Veröffentlichungstag und Bekanntmachung des Hinweises auf die Patenterteilung: **02.06.1993**
(21) Anmeldenummer: 90124703.1
(22) Anmeldetag: 19.12.1990
(51) Int. Cl.: B23D 55/04, B25B 5/12, B25B 1/14

(54) **Vorrichtung zum horizontalen Spannen des auf einem Maschinentisch einer Vertikalsäge aufliegenden Werkstückmaterials**
Device for horizontally clamping workpieces to the table of a vertical saw
Dispositif de serrage horizontal des pièces sur une table d'une scie verticale

(30) Priorität: 09.03.1990 DE 4007449
(43) Veröffentlichungstag der Anmeldung: 11.09.1991
(73) Patentinhaber: KEURO MASCHINENBAU GMBH & CO. KG, D-77855 Achern (DE)
(72) Erfinder: Spath, Dieter, Dr.-Ing., W-7595 Sasbachwalden (DE); Stolzer, Armin, Dipl.-Ing., W-7592 Renchen (DE); Ihle, Manfred, W-7582 Bühlertal (DE)
(74) Vertreter: Lemcke, Rupert, Dipl.-Ing.

(56) Entgegenhaltungen:
- EP-A- 0 268 096
- FR-A- 2 534 833
- GB-A- 460 917
- US-A- 2 024 317
- US-A- 2 651 959
- US-A- 2 958 347
- US-A- 3 759 504

## Beschreibung

Die Erfindung betrifft eine Vorrichtung zum horizontalen Spannen des auf einem Maschinentisch einer Vertikalsäge, insbesondere Vertikalbandsäge aufliegenden Werkstückmaterials, wobei die Spannvorrichtung eine feststehende, im wesentlichen vertikale und vorwiegend quer zur Vorschubrichtung des Sägebandes angeordnete Spannfläche für das Werkstückmaterial und eine dieser gegenüber horizontal verstellbare Spannbacke mit ebenfalls im wesentlichen vertikaler, zur feststehenden Spannfläche paralleler Spannfläche für das Werkstückmaterial aufweist.

Derartige Spannvorrichtungen, (siehe z.B. US-A-2958347) bei denen die Spannflächen der verstellbaren Spannbacke auch leicht geneigt zur feststehenden Spannfläche ausgebildet sein kann, was durch die Erfindung ebenfalls eingeschlossen sein soll, bestehen im bekannten Falle aus entsprechend ausgebildeten Spannstöcken, bei denen die horizontal verstellbare Spannbacke auf einer Seite der durch das Sägeband gebildeten Schnittebene über der Auflagefläche des Maschinentisches in Spannrichtung verschiebbar angeordnet ist. Damit eignet sich die bekannte Spannvorrichtung für die Handhabung in der Regel stangenförmigen Materials, das parallel zu den Spannflächen zwischen diesen abschnittweise vorgeschoben und für den einzelnen Sägevorgang gespannt wird.

Vertikalbandsägen finden jedoch andererseits auch Verwendung für ein sogenanntes Freihandsägen, bei dem das Werkstück auf dem Maschinentisch dem Sägeband ohne die Verwendung der genannten Spannvorrichtung dargeboten wird. Für einen solchen Fall steht eine Vorrichtung der eingangs genannten Art der freien Handhabung des Werkstückmaterials im Wege bzw. macht die Durchführung eines Freihandsägens unmöglich.

Nachteil der bekannten Vorrichtung ist es außerdem, daß das Werkstückmaterial nur auf einer Seite der Schnittebene des Sägebandes während des Schnittes gehalten wird, so daß entweder der Abschnitt ungehalten bzw. ungeführt ist oder es zu dessen Festlegung einer weiteren Spannbackenanordnung bezogen auf die Schnittebene jenseits der eingangs erwähnten Spannbackenanordnung bedarf. Für Gehrungssägen ergibt sich damit außerdem der Nachteil, daß je nach Einstellung des Gehrungswinkels die Spannvorrichtung in Längsrichtung des Werkstückmaterials jeweils unterschiedlich positioniert werden muß, um möglichst nahe der Schnittebene angeordnet zu sein. Ist eine solche unterschiedliche Positionierung der Spannvorrichtung nicht möglich, muß man im Hinblick auf den größtmöglichen Gehrungswinkel für alle übrigen Fälle einen erheblichen Abstand der Spannvorrichtung gegenüber der Schnittebene in Kauf nehmen, was zu einer entsprechend schlechten Halterung des Werkstückmaterials im Schnittbereich führt.

Aufgabe der Erfindung ist es daher, eine Vorrichtung der eingangs genannten Art derart auszubilden, daß sie nicht nur die Halterung des Werkstückmaterials beidseits der Schnittebene während des Schnittes gleichermaßen gewährleistet sondern außerdem die freie Verfügbarkeit des Maschinentisches für ein Freihandsägen erlaubt.

Diese Aufgabe ist ausgehend von einer Vorrichtung der eingangs genannten Art erfindungsgemäß dadurch gelöst, daß die Spannbacke als den Maschinentisch übergreifende Spannbrücke und ebenso die feststehende Spannfläche den Maschinentisch unter Freilassung eines Durchtrittes für das Sägeband übergreifend ausgebildet ist, daß die beiden Enden der Spannbrücke neben dem Maschinentisch horizontal senkrecht zur Ebene der Spannflächen verstellbar und feststellbar geführt sind, daß die Spannbrücke an den Führungen über Führungselemente verschiebbar und an den Führungselementen um eine zur Spannfläche parallele Kippachse schwenkbar angelenkt ist, und daß an den Führungselementen und den Enden der Spannbrücke je eine durch eine Handhabe verstellbare Spannvorrichtung drehbar angelenkt ist derart, daß bei einem Stellzustand der Spannvorrichtung die den Spannzustand entsprechende Schwenkposition der Spannbrücke gegen das Werkstückmaterial gegeben ist, während beim anderen Stellzustand der Spannvorrichtung die Spannbrücke vom Werkstückmaterial gelöst bzw. weggekippt ist.

Diese erfindungsgemäßen Maßnahmen haben zunächst die Wirkung, daß durch die Ausbildung der Spannbacke als den Maschinentisch übergreifende Spannbrücke und durch die gleichzeitige Ausbildung der feststehenden Spannfläche als den Maschinentisch unter Freilassung eines Durchtrittes für das Sägeband übergreifendes Bauteil das Werkstückmaterial für den normalen, durch die Spannvorrichtung gehaltenen Sägevorgang beidseits der Schnittebene fest eingespannt ist, so daß sowohl das zugeführte Material als auch der abzutrennende Materialabschnitt eine definierte Positionierung erfahren.

Andererseits gibt jedoch die erfindungsgemäße Anordnung der Spannbrücke in der nachfolgenden noch näher zu beschreibenden Weise die Möglichkeit, die Spannbrücke aus dem Oberflächenbereich des Maschinentisches zu entfernen, ja sogar sie als Fortsetzung des Maschinentisches einzusetzen, um ein ohne Beeinträchtigung durch die Spannvorrichtung erfolgendes Freihandsägen zu ermöglichen.

Dazu ist erfindungsgemäß die Spannbrücke über ihre beiden Enden neben dem Maschinentisch horizontal senkrecht zur Ebene der Spannflächen verstellbar und feststellbar geführt und an den Führungselementen um eine zur Spannfläche parallele Kippachse schwenkbar angelenkt, so daß sie um diese Kippachse nach entsprechender Verschiebung der Führungselemente über dem Bereich des Maschinentisches hinaus in eine solche Position geschwenkt werden kann, daß ihre Spannfläche eine Fortsetzung der Oberfläche des Maschinentisches, also einer Fortsetzung der Werkstückauflage darstellt.

Zur Betätigung der Spannbrücke im Sinne der Herstellung eines Spannzustandes ist erfindungsgemäß an den Führungselementen und den Enden der Spannbrücke eine Spannvorrichtung drehbar angelenkt derart, daß bei einem Stellzustand der Spannvorrichtung die dem Spannzustand entsprechende Schwenkposition der Spannbrücke gegen das Werkstückmaterial gegeben ist, während beim anderen Stellzustand der Spannvorrichtung die Spannbrücke vom Werkstückmaterial gelöst bzw. weggekippt ist.

Auf diese Weise erfährt die Spannbrücke eine feste Anspannung gegen das Werkstück in der Form, daß gleichzeitig ein sogenannter Tiefzieheffekt entsteht, also eine Einwirkung auf das Werkstück, bei er die Spannfläche der beweglichen Spannbacke das Werkstück während des Spannvorganges gegen die Auflagefläche des Maschinentisches drückt.

Wird nach einer weiteren Ausbildung der Erfindung jede Spannvorrichtung durch einen Kniehebel gebildet, der aus wenigstens zwei drehbar miteinander verbundenen Hebelarmen besteht, wobei die freien Enden der Hebelarme einerseits mit den Führungselementen und andererseits mit den Enden der Spannbrücke drehbar verbunden sind, so ist dafür gesorgt, daß durch geringe seitens der Handhaben aufgebrachte Stellkräfte hohe Spannkräfte über die Spannbrücke und die damit verbundene Spannfläche auf das Werkstückmaterial ausgeübt werden können.

Andererseits bietet die Drehbarkeit bzw. Schwenkbarkeit der Spannbrücke um die Kippachse an den Führungselementen die Möglichkeit, die Spannbrücke aus ihrer normalerweise vertikalen Stellung in einer Bewegung vom Sägeband fort nach unten zu klappen, so daß sie bei entsprechender Entfernung vom Sägeband mittels damit einhergehender Verschiebung der Führungselemente auf den Führungen außerhalb der Auflagefläche des Maschinentisches liegt, was die Ebene der mit ihr verbundenen Spannfläche betrifft. Damit ergibt sich im Ergebnis eine vollkommene Freiheit der Arbeitsfläche des Maschinentisches für die Bewegung von Materialstücken, um diese von freier Hand zu sägen, wobei die nach unten geklappte Spannbrücke vorteilhafterweise eine Vergrößerung der durch den Maschinentisch gegebenen Arbeitsfläche zur Bedienungsperson hin ergibt.

Zweckmäßig ist es, daß die Handhaben durch eine zur Spannbrücke parallelen Griffbügel miteinander verbunden sind. Auf diese Weise kann durch eine vor der Vertikalbandsäge bzw. vor deren Arbeitstisch stehende Bedienungsperson die Betätigung der Spannbacke mittels des Griffbügels durch dessen Verschwenkung um die Kippachse erfolgen, wobei gleichzeitig durch den Griffbügel gewissen Sicherheitsvoraussetzungen Rechnung getragen ist, indem der Griffbügel normalerweise nur mit beiden Händen betätigt werden kann, also nicht eine Hand der Bedienungsperson für ein Hineinlangen in den Arbeitsbereich des Sägebandes frei ist.

Zur konstruktiven Gestaltung der Spannbrücke ist es ferner vorteilhaft, daß die Spannbrücke die Führungselemete mit ihren Enden und an diesen angeordneten, zu den Führungen parallelen Wangen übergreift, wobei die Wangen die Kippachse aufnehmen.

Was die Ausbildung der Kniehebel betrifft, so können diese über beidseits in ihren Schwenkweg ragende Stifte der Handhaben in Strecklage bzw. aus Strecklage bringbar sein. Durch die erwähnten Stifte ist also im Ergebnis beispielsweise durch Bewegung des Griffbügels die Verschwenkung des Kniehebels und damit die Anspannung bzw. Lösung der Spannbrücke gegenüber dem zu spannenden Werkstück in einfacher Weise möglich, wobei der Kraftaufwand bezüglich der Handbetätigung in geringen Grenzen bleibt.

Was die Führungselemente für die Spannbrücke betrifft, mit der diese an den erwähnten Führungen verstellbar und feststellbar ist, so gibt es dafür mannigfaltige Möglichkeiten. Die Führungen können beispielsweise als Führungsschienen ausgebildet sein, an denen die Führungselemente verschiebbar und in beliebiger, geeigneter Weise verspannbar sind.

Als zweckmäßig hat es sich jedoch erwiesen, daß die Führungselemente als Führungsklötze ausgebildet sind, die sich horinzontal und senkrecht zu den Spannflächen erstreckende Führungsstangen umfassen, daß die Führungsklötze auf Seiten der Kippachse unter Bildung von Klemmbacken parallel zu den Führungsstangen aufgeschlitzt sind und daß die Kippachse als mit den Handhaben undrehbar verbundene Spannschrauben zur lösbaren Klemmung der Führungsklötze auf den Führungsstangen ausgebildet sind, die in einer der Klemmbacken frei drehbar und in Richtung auf die andere Klemmbacke axial abgestützt sowie in der anderen Klemmbacke über einen Gewindeeingriff gelagert sind.

Durch diese Ausbildung lassen sich die Führungselemente bezüglich ihrer Klemmung auf den Führungsstangen durch Betätigung der Handhabe bzw. des Griffbügels mittels dessen im Zuge der Werkstückspannung stattfindenden Verschwenkung lösen bzw. festspannen, denn mit der Verschwenkung der Handhabe werden auch die Spannschrauben gedreht, wobei die Spannschrauben so eingestellt und angeordnet sind, daß bei einer entsprechenden Schwenkbewegung der Handhaben bzw. des Griffbügels zunächst eine Festklemmung der Führungselemente auf den Führungsstangen stattfindet, bevor dann am Schluß der Schwenkbewegung der Kniehebel in seine gestreckte Lage gebracht und damit das Werkstück unter entsprechender Restschwenkung der Spannbrücke für den sägenden Arbeitsgang eingespannt wird.

Bei der umgekehrten, die Spannung lösenden Bewegung der Handhaben bzw. des Griffbügels wird zunächst die Spannvorrichtung gelöst bzw. der Kniehebel wieder aus seiner gestreckten Lage gebracht, woraufhin dann die Verspannung der Führungsklötze auf den Führungsstangen durch weitere Drehung der Spannschrauben gelöst wird, so daß die Führungsklötze auf den Führungsstangen verschiebbar sind und somit auch bezüglich der Spannbrücke eine andere Position beispielsweise bezüglich eines anderen Werkstückquerschnittes eingestellt werden kann.

Zweckmäßig ist es, daß die Spannschrauben mit ihrem Gewindeeingriff in den anderen Klemmbacken über eine in diesen axial einstellbare Gewindehülse drehbar gelagert sind. Damit läßt sich durch entsprechende Betätigung der Gewindehülse die Arbeitsstellung der Spannschrauben gegenüber den anderen Klemmbacken voreinstellen, so daß die vorstehend geschilderte Arbeitsfolge für die Klemmung der Führungsklötze auf den Führungsstangen einerseits und die Spannung der Spannbrücke gegenüber dem Werkstück andererseits gewährleistet ist. Inbesondere lassen sich auch verschleißbedingte Ungenauigkeiten dieses Arbeitsablaufes im Verlauf der Betriebszeit der erfindungsgemäßen Spannvorrichtung korrigieren.

Hier ist es weiterhin vorteilhaft, daß die Axialabstützung zwischen Spannschrauben und der den Handhaben benachbarten Klemmbacken über zwischengesetzte Federelemente erfolgt. Damit ist sichergestellt, daß im Zuge des vorerwähnten Arbeitsablaufes keine Überspannung an den Führungsklötzen gegenüber den Führungsstangen auftreten kann, ohne daß andererseits die Klemmkraft der Führungsklötze gegenüber den Führungsstangen unter einem für eine feste Verklemmung erforderlichen Kraftmaß bleibt.

Die Schwenklagen der Kniehebel zwischen gestreckter und ungestreckter Lage können durch in den Bewegungsbereich der Kniehebel ragenden, von den Ende der Spannbrücke bzw. deren Wangen vorstehende Anschläge begrenzt sein. Diese Anschläge sorgen dafür, daß der Kniehebel im Sinne der Herstellung des Spannzustandes der Spannbrücke nicht über seine gestreckte Lage hinaus überdrückt werden kann. Andererseits ist auch sichergestellt, daß beim Öffnen der Spannvorrichtung durch Überführung des Kniehebels aus seiner gestreckten Lage der Kiehebel nicht eine im Entspannungsinn zu weit ausgelenkte Knickstellung einnehmen kann.

Nach einer weiteren Ausgestaltung des Erfindungsgegenstandes kann vorgesehen sein, daß die drehbare Anlenkung der Kniehebel an den Führungselementen lösbar bzw. herausnehmbar ausgebildet ist.

Macht man von dieser Möglichkeit Gebrauch, indem man die genannte Anlenkung, die in der Regel aus Gelenkbolzen besteht, herausnimmt, so ist die Spannbrücke gegenüber den Führungselementen bzw. den diese bildenden Führungsklötzen grundsätzlich um die Kippachse frei schwenkbar, so daß die Spannbrücke vollkommen aus ihrer Vertikalstellung von einem gedachten Werkstück fort nach unten geschwenkt werden kann. Wird gleichzeitig die Spannbrücke durch entsprechende Verschiebung ihrer Führungselemente bzw. den diese bildenden Führungsklötze weit genug vom Sägeband fort verschoben, so läßt sie sich bezogen auf die Bedienungsperson vor dem Maschinentisch soweit nach unten klappen, daß der Maschinentisch vollkommen frei wird. Auf diese Weise kann dann der Maschinentisch in ungestörter Weise der von Hand stattfindenden Bewegung eines Werkstückes zum Freihandsägen zur Verfügung stehen. Hier ist also die Spannvorrichtung im Grunde genommen aus dem Wege geräumt, denn die feststehende Spannfläche auf Seiten des Zutritts des Sägebandes muß ohnehin vorhanden bleiben, weil hinter deren Ebene eine Bewegung des Werkstückes nicht möglich bzw. zulässig ist.

Zweckmäßig ist es hier, daß die Führungen der Spannbrücke neben dem Maschinentisch und unterhalb der Tischfläche angeordnet sind derart, daß die Spannbrücke bei gelöster Anlenkung der Kniehebel an den Führungselementen um die Kippachse in eine Position schwenkbar ist, bei der ihre Spannfläche in der Oberflächenebene des Maschinentisches liegt. Hier ist also zusätzlich im Sinne der vorstehend diskutierten Schwenkbarkeit der Spannbrücke dafür Sorge getragen, daß diese im heruntergeklappten Zustand eine Ergänzung bzw. Erweiterung der Arbeitsfläche des Maschinentisches bildet, wodurch gerade im Hinblick auf größere Werkstücke deren Handhabung zum Freihandsägen zusätzlich erleichtert wird.

Eine weitere zweckmäßige Ausgestaltung des Erfindungsgegenstandes liegt darin, daß die genannten Führungen bzw. Führungsstangen wenigstens mittelbar an einem Maschinengestell der Vertikalbandsäge angeordnet sind. Dabei kann vorgesehen sein, daß die Führungen bzw. Führungsstangen am Maschinengestell in Richtung ihrer Längserstreckung axial verschiebbar gelagert sind und daß sie sich bezüglich dieser Verschiebelagerung in Richtung von der Spannbacke fort unter Wirkung von am Maschinengestell abgestützten, gegebenenfalls einstellbaren Federmitteln in Anlage an einem durch das Maschinengestell gebildeten Anschlag befinden.

Dadurch kann in einfacher Weise sichergestellt werden, daß bei eventuell überhöht auftretenden Spannkräften mit der Spannbrücke gegenüber dem Werkstück keine Überlastung insbesondere der Kniehebel und der Handhabe bzw. des Griffbügels eintritt unter Berücksichtigung des Umstandes, daß sich hier im letzten Moment der Spannbewegung der Spannbrücke in Richtung auf das Werkstück die Führungselemente bzw. Führungsklötze auf den Führungsstangen festgeklemmt sind und dort bei erhöhten Spannkräften keine Ausweichmöglichkeit mehr besteht. Diese Ausweichmöglichkeit ist also durch die vorerwähnte Gestaltung gegeben, indem nunmehr die Führungsstangen der Federkraft bei Überschreitung einer bestimmten Spannkraft der Spannvorrichtung federnd nachgeben können, wobei selbstverständlich diese Federkraft so eingestellt ist, daß die ausreichende Spannkraft der Spannbrücke gegenüber dem Werkstück immer aufrechterhalten bleibt. Dies gilt insbesondere auch im Hinblick auf während des sägenden Arbeitsvorganges auftretende Schwingungen, die sich im Hinblick auf eine Lösung der Einspannung des Werkstückes auswirken könnten. Ein solches Lösen des Werkstückes wird durch die federnde Vorspannung der Führungsstangen verhindert.

Die für die Erfindung vorausgesetzte Vertikalbandsäge kann so ausgebildet sein, daß sie für den sägenden Arbeitsvorgang auf eine Neigung in Richtung auf das Werkstück einstellbar ist, um zum Beispiel je nach vorhandenem Werkstückquerschnitt das Eindringen des Sägebandes an einer möglichst kleinen Schnittstelle zu ermöglichen. Eine solche Schrägstellung des Sägebandes gegenüber der Vertikallage führt am Ende des Arbeitsschnittes dazu, daß das Sägeband nicht parallel zu der vertikalen oder im vertikalen Spannfläche der Spannbrücke ausläuft.

Dadurch ist es zum vollständigen Durchtrennen des Werkstückmaterials erforderlich, daß das Sägeband teilweise in die an der Spannbrücke gebildeten Spannbacke eindringt. Ein solcher Vorgang ist an sich bei Sägemaschinen vielfach üblich. Um hierzu die passende Möglichkeit zu geben, ist es im Rahmen des Erfindungsgegenstandes zweckmäßig, daß die mit der Spannbrücke verbundenen Spannbacke wenigstens auf der die Spannfläche aufweisenden Seite durch ein dickwandiges, austauschbares Verschleißprofil, insbesondere Aluminiumprofil gebildet ist und in ein solches Aluminiumprofil kann das Sägeband ohne weiteres einschneiden, wobei nach einem gewissen Gebrauch einer derart ausgebildeten Spannbacke das Aluminiumprofil durch ein neues Materialstück ausgetauscht werden kann.

Weiter hat es sich im Zusammenhang mit der Erfindung als für die Beendigung des Arbeitsganges des Vertikalsägebandes als zweckmäßig erwiesen, daß an einem der Führungselemente bzw. Führungsklötze ein sich im wesentlichen horizontal erstreckender Schaltarm gegebenenfalls schwenkbar angelenkt ist zur Vorschubbegrenzung bzw. -abschaltung für die Vertikalbandsäge, und daß der Schaltarm in diesem vorschubbedingten Bewegungsbereich des Sägebandes bzw. eines das Sägeband umlaufende aufnehmenden, in Richtung auf das Werkstückmaterial vorschiebbaren Maschinenteiles ragt.

Dadurch ist mit der Einstellung der Spannbrücke bzw. der diese tragenden Führungselemente gleichzeitig auch die Abschaltung bzw. Begrenzung des Vorschubes für das Sägeband verbunden, so daß es hierzu keiner besonderen weiteren Schaltmittel bedarf. Dabei ist die Abschaltvorrichtung, die auch gleichzeitig den Rücklauf des das Sägeband umlaufend tragenden Maschinenteils bewirken kann, unabhängig davon, welche Kipplage der vorstehend beschriebenen Art das Sägeband gegenüber der Vertikalen hat bzw. welche Schwenklage eventuell auch dem Sägeband um eine vertikale, in der Vorschubebene liegende Achse gegeben ist, um beispielsweise Gehrungsschnitte herzustellen, also solche Schnitte, die sich um einen von dem rechten Winkel zur Ebene der Spannflächen abweichenden Winkel durch das Werkstückmaterial erstrecken.

Was den Anschlag des Maschinenteils am Schaltarm betrifft, so ist dieser zweckmäßigerweise durch beidseits des Sägebandes am Maschinenteil angeordnete Anschlagstifte gewährleistet. Diese Ausbildungsform ergibt eine Optimierung des Abschaltvorganges im Hinblick auf unterschiedlich an der Vertikalbandsäge eingestellte Gehrungswinkel insbesondere dahingehend, daß die Spannbacke der Spannbrücke keine Beeinträchtigung durch das Sägeband erfährt.

Schließlich ist nach der Erfindung vorgesehen, daß der Griffbügel im Bereich seiner Längsmitte eine zur Spannfläche der Spannbacke parallele Schutzscheibe tägt, die den Griffbügel nach oben überrragt. Eine solche Schutzscheibe, die vorzugsweise aus durchsichtigem Material besteht, bildet eine automatische Schutzvorrichtung, die verhindert, daß der Griffbügel im Bereich des Sägebandes, damit also im für die Bedienungsperson gefährlichen Bereich überhaupt angefaßt wird, ohne daß andererseits dadurch eine Behinderung bezüglich der Übersichtlichkeit des Arbeitsbereiches der Vertikalbandsäge gegeben ist.

Der vorstehend beschriebene Erfindungsgegenstand bietet insgesamt also die Möglichkeit zu einer besonders ergonomischen und rationellen Arbeitsweise durch die Zusammenfassung sämtlicher Funktionen im Zusammenhang mit der Spannung des Werkstückmaterials in einem Betätigungselement. Diese Funktionen umfassen das Verschieben der Spannbrücke, deren Klemmen und Lösen gegenüber dem Werkstückmaterial, die automatische Einstellung des maximalen Vorschubweges des Sägewerkzeuges für die Gerade- und Gehrungsschnitte unter Berücksichtigung von senkrechten und geneigten Bandstellungen, automatische Absicherung des Arbeitsbereiches hinsichtlich Unfallgefahr bei gespanntem Zustand der Spannbrücke, sowie gute Zugänglichkeit bei gelöstem Zustand der Spannbrücke für alle Gehrungswinkel des Sägewerkzeuges. Schließlich ist die Möglichkeit enthalten, den Maschinentisch zum Freihandsägen frei zur Verfügung zu haben, nachdem die Spannbrücke aus dem Bereich des Maschinentisches abgeklappt bzw. fortgeschwenkt ist.

Weitere erfindungswesentliche Merkmale und Einzelheiten ergeben sich aus der nachfolgenden Beschreibung von Ausführungsformen der Erfindung, die auf der Zeichnung dargestellt sind. In der Zeichnung zeigen:
- Fig. 1: eine perspektivische Gesamtansicht einer Vertikalbandsäge;
- Fig. 2: eine Draufsicht auf die Maschine gemäß Fig. 1 in einem Betriebszustand der erfindungsgemäßen Spannbacke;
- Fig. 3: eine Draufsicht auf die Maschine gemäß Fig. 1 mit einem anderen Betriebszustand der erfindungsgemäßen Spannbacke;
- Fig. 4: eine ausschnittweise Vorderansicht der Maschine gemäß Fig. 1 bis 3 bezüglich der erfindungsgemäßen Spannbacke;
- Fig. 5 bis 7: ausschnittweise Seitenansichten der Maschine gemäß den Fig. 1 bis 4 im Bereich der Spannvorrichtung;
- Fig. 8: eine Schnittansicht auf einer Seite der erfindungsgemäßen Spannvorrichtung gemäß der Schnittlinie VIII-VIII in Fig. 4;
- Fig. 9: eine gesamte Seitenansicht der Maschine gemäß Fig. 1 bei unterschiedlichen Betriebszuständen des Sägebandes und
- Fig. 10 und 11: eine Draufsicht der Maschine gemäß Fig. 1 bei unterschiedlichen Schwenklagen des Sägebandes bzw. der mit dem Sägeband verbundenen Schnittebene.

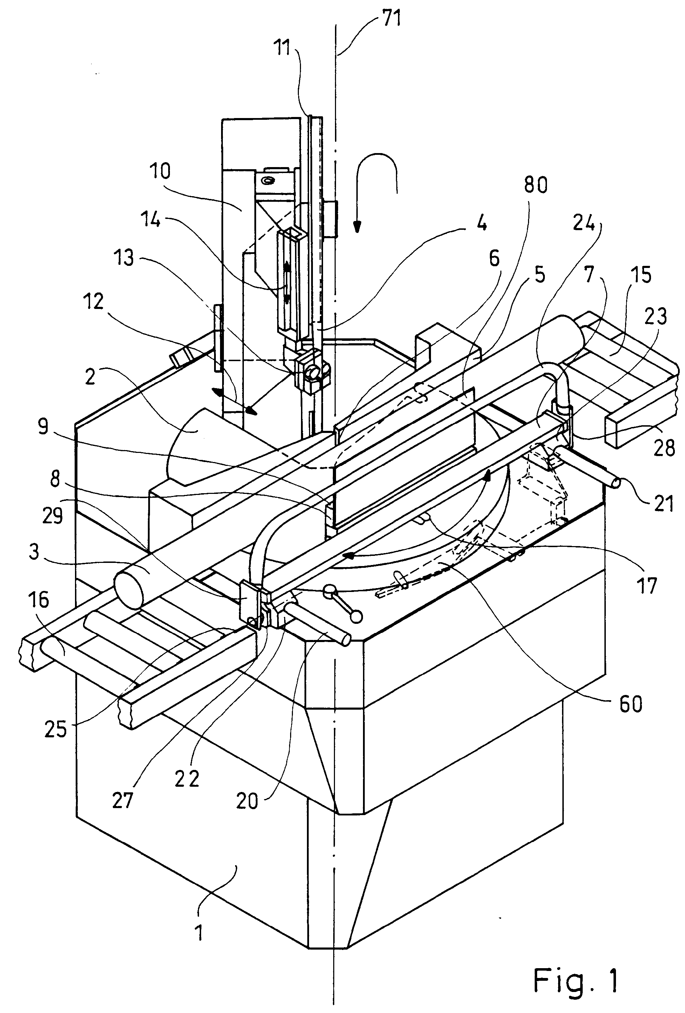

Fig. 1 zeigt in perspektivischer Ansicht eine Vertikalbandsäge mit einem Maschinengestell 1. Das Maschinengestell 1 weist einen Maschinentisch 2 in Form eines am Maschinengestell 1 drehbar gelagerten Drehtisches 2 auf, auf dem das Werkstückmaterial 3, im vorliegenden Falle stangenförmiges Material, abgelegt ist. Zum sägenden Arbeitsvorgang muß das Werkstückmaterial 3 auf dem Drehtisch 2 gespannt werden. Hierzu dient auf Seiten des Zutritts eines Sägebandes 4 eine den Drehtisch übergreifende, feststehende Spannfläche 5 mit einem Durchtritt 6 für das Sägeband und gegenüber der Spannfläche 5 eine Spannbrücke 7, an der eine Spannbacke 8 angebracht ist, die mit ihrer Spannfläche 9 das Werkstückmaterial 3 gegen die Spannfläche 5 drückt.

Das Sägeband 4 läuft über an einem horizontal in Richtung auf das Werkstückmaterial 3 verfahrbaren Maschinenteil 10 drehbar gelagerte Umlenkräder, von denen das oberhalb der Ebene des Drehtisches 2 befindliche Umlenkrad 11 aus Fig. 1 ersichtlich ist. Entsprechend muß man sich am Maschinenteil 10 unterhalb der Auflageebene des Werkstückmaterials 3 im Maschinengestell ein weiteres Umlenkrad am Maschinenteil 10 drehbar gelagert vorstellen.

Das Maschinenteil 10 ist in noch später zu beschreibender Weise in Richtung auf das Werkstückmaterial 3 verschiebbar am Maschinengestell 1 geführt. Auf diese Weise kann das Sägeband 4 die Öffnung 6 der Spannfläche 5 in Richtung auf das Werkstückmaterial 3 durchtreten und das Werkstückmaterial durchtrennen solange, bis das Sägeband 4 die Spannbacke 8 erreicht.

Die Vorschubrichtung des Sägebandes 4 ist vereinfacht durch den Doppelpfeil 12 dargestellt.

In bekannter Weise ist das Sägeband 4 am Maschinenteil 10 oberhalb und unterhalb der Auflageebene des Werkstückmaterials 3 auf dem Drehtisch 2 durch Bandführungen gehalten und in die Schnittebene geschwenkt, wobei aus Fig. 1 die obere Bandführung 13 ersichtlich ist, die am Maschinenteil 10 in Richtung des Doppelpfeiles 14 verstellbar und einstellbar angeordnet sein kann in Anpassung auf den Querschnitt des Werkstückmaterials 3.

Für die Zu- und Abführung des Werkstückmaterials 3 sind dem Maschinenständer 1 Rollenbahnen 15, 16 vor- bzw. nachgeschaltet.

Die Schnittebene des Sägebandes 4 geht im Falle der Fig. 1 senkrecht zur Längsrichtung des Werkstückmaterials 3 und ist durch einen entsprechenden Durchtrittsschlitz 17 innerhalb des Drehtisches 2 gegeben, der aus Fig. 1 an der angegebenen Stelle mit seinem Ende ersichtlich ist.

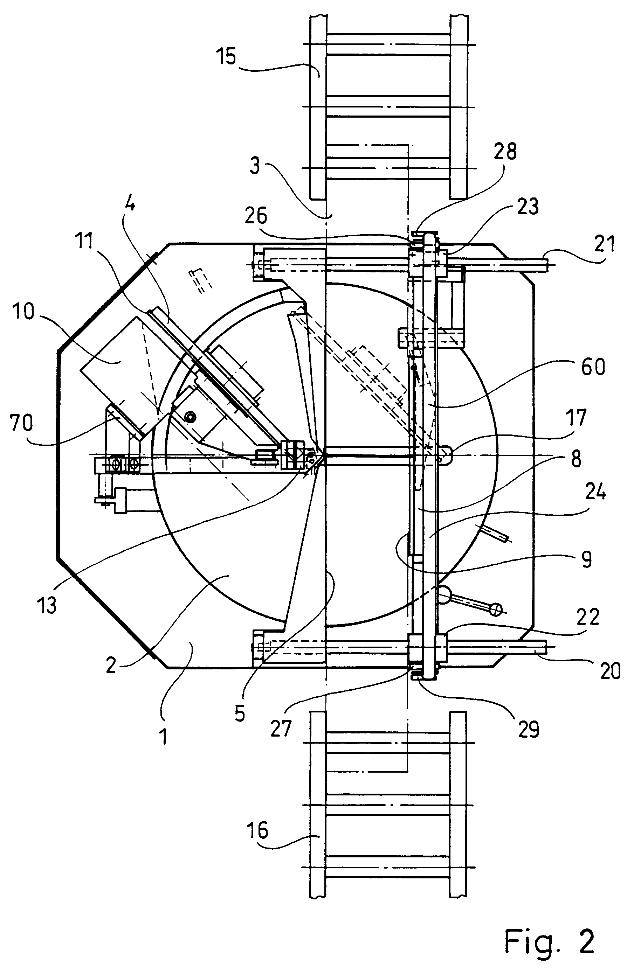

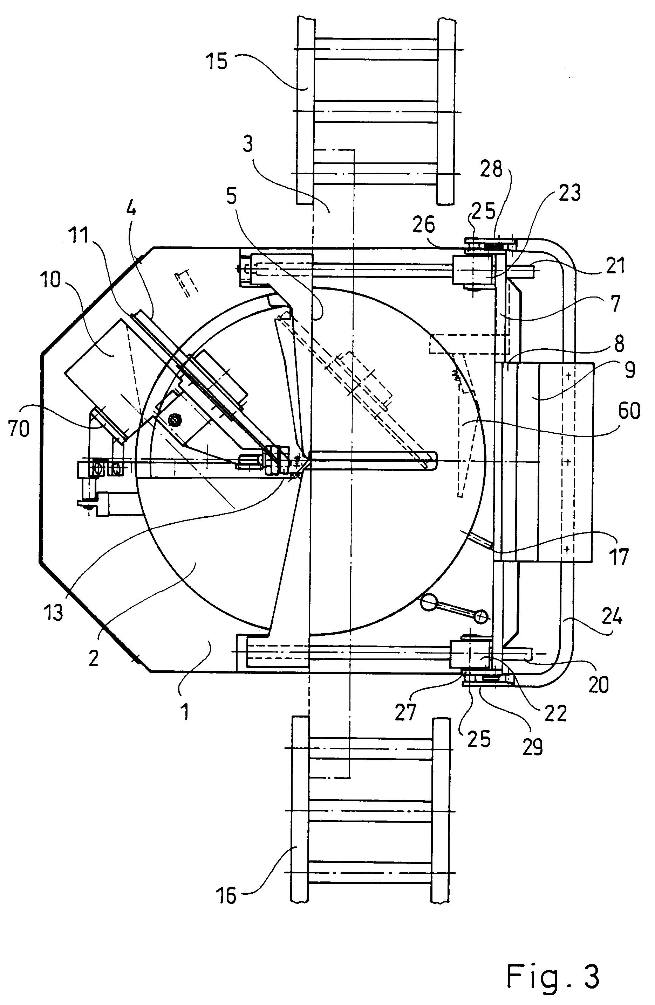

Die Fig. 2 und 3 zeigen diese Verhältnisse noch einmal in Draufsicht, die insbesondere deutlicher den Durchtrittsschlitz 17 innerhalb des Drehtisches 2 erkennen lassen.

Zur Spannung des Werkstückmaterials 3 zwischen den Spannflächen 5 und 9 muß, da die Spannfläche 5 feststehend angeordnet ist, die Spannfläche 9 bzw. die diese aufweisende Spannbacke 8 in Richtung auf das Werkstückmaterial 3 bewegt und gegenüber dem Werkstückmaterial festgespannt werden.

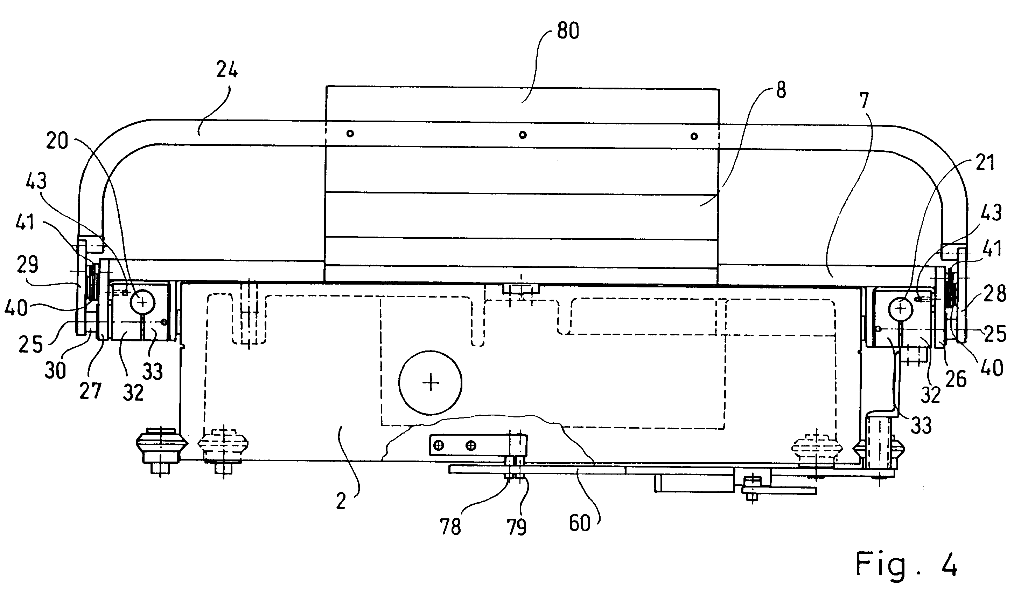

Hierzu ist die Spannbrücke 7 an horizontalen, sich im wesentlichen quer zur Richtung der Spannfläche 5 erstreckenden Führungen 20, 21 in Form von Führungsstangen mit kreisförmigem Querschnitt verschiebbar und feststellbar. Dies geschieht über mit der Spannbrücke 7 in Verbindung stehende Spannklötze 22, 23. Diese Spannklötze sind durch einen mit der Spannbrücke in Verbindung stehenden Griffbügel 24 gegenüber den Führungsstangen verklemmbar bzw. bezüglich der Klemmung lösbar. Dabei findet durch Betätigung des Griffbügels um dessen Kippachse 25 an den Spannklötzen 22, 23 gleichzeitig auch eine Bewegung der Spannbrücke 7 und damit der Spannbacke 8 gegenüber dem Werkstückmaterial 3 statt, wie dies nachfolgend insbesondere anhand der Fig. 4 bis 8 näher erläutert wird.

Aus der zeichnerischen Darstellung gemäß diesen Fig. 4 bis 8 ist ersichtlich, daß die Spannbrücke 7 an den Spannklötzen 22, 23 um die Kippachse 25 schwenkbar gelagert ist mittels seitlicher Wangen 26, 27. Ebenso ist der Griffbügel 24 um die Kippachse 25 schwenkbar gelagert über an seinen Enden angeordnete Wangen 28, 29.

Die Kippachse ist gebildet durch je eine Spannschraube 30, die in den Spannklötzen 22, 23 gelagert und mit jeweils den Wangen 28, 29 des Griffbügels 24 undrehbar verbunden ist.

Die auf den Führungsstangen 20, 21 verschiebbaren Spannklötze 22, 23 weisen auf ihrer der Kippachse 25 zugewandten Seite eine Einschlitzung 31 auf, über die sie vermittels der Spannschraube 30 gegenüber den Führungsstangen 20, 21 klemmbar sind. Hierzu sind die Spannschrauben 30 an der den Wangen 26, 28 zugewandten Seite in der dortigen Klemmbacke 32 der Spannklötze 22, 23 frei drehbar gelagert und in Richtung auf die andere Klemmbacke 33 axial abgestützt, wobei sie in dieser anderen Klemmbacke über einen Gewindeeingriff 34 gelagert sind.

Diese Bauform hat zunächst die Wirkung, daß durch schwenkende Betätigung des Griffbügels 24 über die Wangen 28 und die damit undrehbar verbundenen Spannschrauben 30 die Klemmung der Spannklötze 22, 23 gegenüber den Führungsstangen 20, 21 hergestellt bzw. gelöst werden kann.

Nun ist auf den Spannschrauben 30 bzw. um die Kippachse 25 ebenfalls die Spannbrücke 7 über ihre seitlichen Wagen 26 drehbar gelagert, so daß ihr die Grundeinstellung vermittelt wird, die die Spannklötze 22, 23 auf den Führungsstangen 20, 21 erhalten.

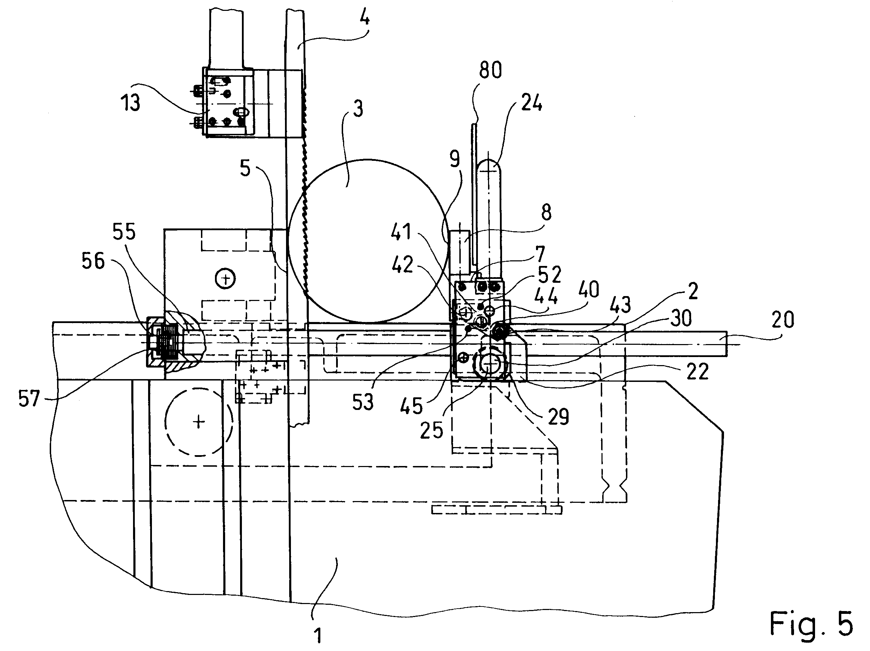

Um nun die Spannbrücke 7 und damit die Spannbacke 8 in Richtung auf das Werkstückmaterial 3 im Sinne einer Verspannung des Werkstückmaterials gegenüber der feststehenden Spannfläche 5 zu bewirken, ist auf beiden Seiten mit der Spannbrücke jeweils ein aus zwei gelenkig miteinander verbundenen Armen 40, 41 gebildeter Kniehebel mit dem Ende seines Armes 41 bei 42 drehbar verbunden, wobei der andere Arm 40 mit seinem freien Ende bei 43 drehbar am jeweiligen Spannklotz 22, 23 angelenkt ist. (Siehe hierzu insbesondere Fig. 5 bis 7.)

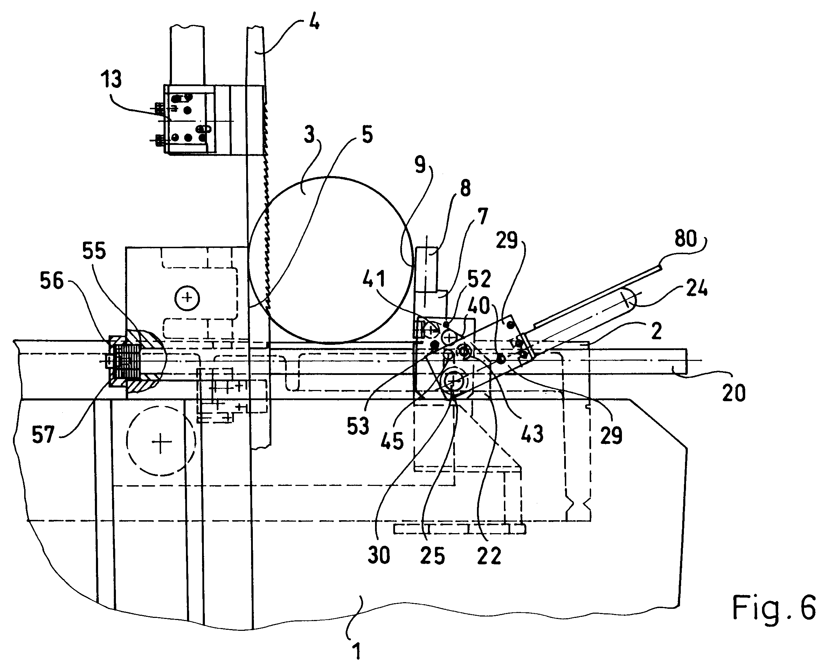

Die Schwenkbewegung der Spannbrücke 7 um die Kippachse 25 führt also zu einer Bewegung des Kniehebels 40, 41 zwischen dessen aus Fig. 5 ersichtlicher gestreckter Lage und dessen aus Fig. 6 ersichtlicher, geknickter Lage, wobei die Überführung des Kniehebels zwischen diesen Lagen durch Anschläge 44, 45 erfolgt, die aus gehend von den Wangen 28, 29 des Griffbügels 24 in dem Bewegungsbereich des Armes 41 des Kniehebels ragen und diesen je nach Schwenkbewegung des Griffbügels 24 zwischen gestreckter Lage des Kniehebels und dessen ausgeknickter Lage hin und her bewegen. Dabei entspricht der gestreckten Lage des Kniehebels 40, 41 gemäß Fig. 5 die vertikale Stellung des Griffbügels 24. Dieser entspricht ebenfalls die Spannstellung der Spannbacke 8 gegen das Werkstückmaterial 3.

Werden durch Kippung des Griffbügels 24 aus der in Fig. 5 gezeigten Lage in die aus Fig. 6 ersichtliche Stellung auch die jeweils mit dem Griffbügel 24 verbundenen Wangen 28, 29 verschwenkt, so bewegt der damit verbundene Anschlagstift 45 den Kniehebelarm 41 mit, wodurch der Kniehebel aus seiner gestreckten Lage in eine Knicklage ausgelenkt wird, durch die die Spannbacke 8 vom Werkstückmaterial 3 freikommt, indem sie sich nunmehr über ihre Wangen 26, 27 um die Kippachse 25 vom Werkstückmaterial 3 fort verschwenken kann.

Die geschilderte Mechanik gibt also die Möglichkeit, durch Bewegung des Griffbügels 24 einmal die Verspannung der Spannklötze 22, 23 gegenüber den Führungsstangen 20, 21 zu lösen, um die Führungsklötze auf den Führungsstangen zu verschieben, womit gleichzeitig eine entsprechende, durch den Querschnitt des Werkstückmaterials bedingte Verschiebung der Spannbacke 8 erfolgt.

Zum anderen kann durch entsprechende Bewegung des Griffbügels 24 bei auf das Werkstückmaterial eingestellter Positionierung der Spannbacke 8 dann die Klemmung des Werkstückmaterials 3 gegenüber der Spannfläche 5 erfolgen.

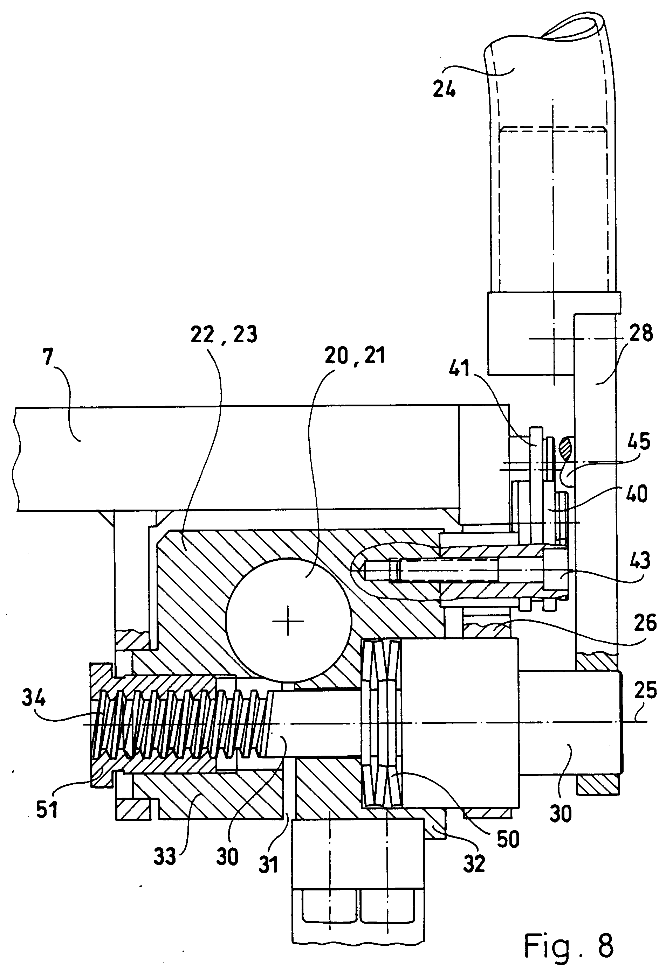

Wie insbesondere aus Fig. 8 ersichtlich, kann die axiale Abstützung der Spannschraube 30 gegenüber der Klemmbacke 32 über ein Federpaket 50 erfolgen, um eine Überspannung bzw. übermäßige Spannbeanspruchung der Spannschraube 30 zu verhindern, ohne daß dadurch die zwischen den Klemmbacken 32, 33 erforderliche Spannkraft beeinträchtigt wäre.

Des gleichen ist zur Grundeinstellung der Spannschraube 30 aus Fig. 8 im Bereich des Gewindes 34 eine Gewindehülse 51 ersichtlich, die innerhalb der Klemmbacke 33 durch ein Gewinde einstellbar ist.

Insbesondere anhand der Fig. 5 bis 7 waren die Anschläge 44, 45 erläutert, durch die der Kniehebel 40, 41 zwischen seinen Schaltstellungen bewegbar ist. Damit der Kniehebel keine die gewünschten Schaltstellungen überschreitende Positionen einnehmen kann, sind mit den Wangen 26, 27 Anschlagstifte 52, 53 verbunden, die den Schwenkbereich des Armes 41 des Kniehebels 40, 41 in dem gewünschten Maß begrenzen.

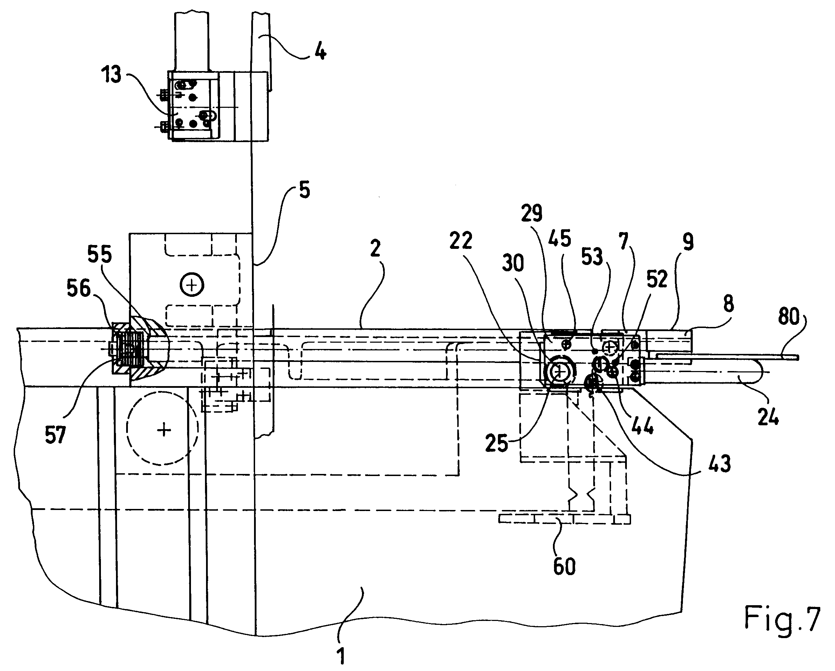

Wie bereits früher beschrieben und anhand der Fig. 7 dargestellt, kann nun auch die Spannbrücke 7 und damit die Spannbacke 8 aus dem normalen Arbeitsbereich heraus um die Kippachse 25 geschwenkt werden. Hierzu ist es erforderlich und möglich, die Schwenkachse 43 des Armes 40 des Kniehebels, die durch einen Bolzen (siehe Fig. 8) dargestellt ist, zu lösen. Dann kann die Spannbrücke 7 ohne Behinderung durch den Kniehebel 40, 41 um die Kippachse 25 in die aus Fig. 7 ersichtliche Stellung geschwenkt werden, in der die Spannfläche 9 ihrer Spannbacke 8 eine Ergänzung der Oberfläche des Drehtisches 2 darstellt, so daß Werkstückmaterial ohne Beeinträchtigung durch die Spannvorrichtung im Freihandverfahren auf dem Maschinentisch aufgelegt und verschoben werden kann.

Die Spannung des Werkstückmaterials 3 in der aus den Fig. 5 und 6 ersichtlichen Weise kann je nach den Umständen des Einzelfalles bei zu eng positionierter Klemmung der Spannklötze 22, 23 auf den Führungsstangen 20, 21 gegenüber dem Werkstückmaterial übermäßige Spannkräfte bedingen. Um dem zu begegnen, sind die Führungsstangen 20, 21 am Maschinengestell 1 axial verschiebbar gelagert und gegen Anschläge 55 durch Federpakete 56 gespannt, die einerseits an den Anschlägen 55 und andererseits an Stützscheiben 57 der Führungsstangen 20, 21 widergelagert sind.

In diesem Zusammehang zeigt Fig. 5 das Federpaket 56 im gespannten Zustand, während Fig. 6 entsprechend dem Zustand der Spannbrücke 7 das Federpaket 56 im entspannten Zustand wiedergibt.

Die Figuren zeigen außerdem einen an einem der Führungselemente 23 sich im wesentlichen horizontal erstreckenden Schaltarm 60, der an diesem Führungselement gegebenenfalls schwenkbar angelenkt ist. Dieser Schaltarm kann dann entsprechend mit Schaltelementen zur Vorschubbegrenzung bzw. Vorschubumkehr für das Maschinenteil 10 ausgerüstet sein.

Ebenso besteht jedoch auch die Möglichkeit, den Schaltarm zwar mit dem Führungselement 23 verschiebbar, im übrigen aber an diesem feststehend anzuordnen, so daß das Maschinenteil beim Vorschub des Sägebandes am Schaltarm anläuft.

In beiden Fällen gilt folgendes: Wenn die Säge bei entsprechendem Vorschub des Sägebandes die Durchtrennung des Werkstückmaterials bewirkt hat, erreicht sie eine durch die Einstellung der Spannbrücke 7 vorgegebene Stellung, die andererseits auch im Schaltarm 60 wiederkehrt. Läuft nun das Maschinenteil 10 mit einem entsprechenden Abschnitt gegen den Schaltarm 60, so kann dies die Abschaltung des Vorschubes und den Rücklauf des Maschinenteils 10 bewirken, wobei, wie gesagt, die jeweilige Umkehrstellung bedingt durch den Querschnitt des Werkstückmaterials und die damit einhergehende Einstellung der Spannbrücke 7 gleichzeitig eingestellt ist.

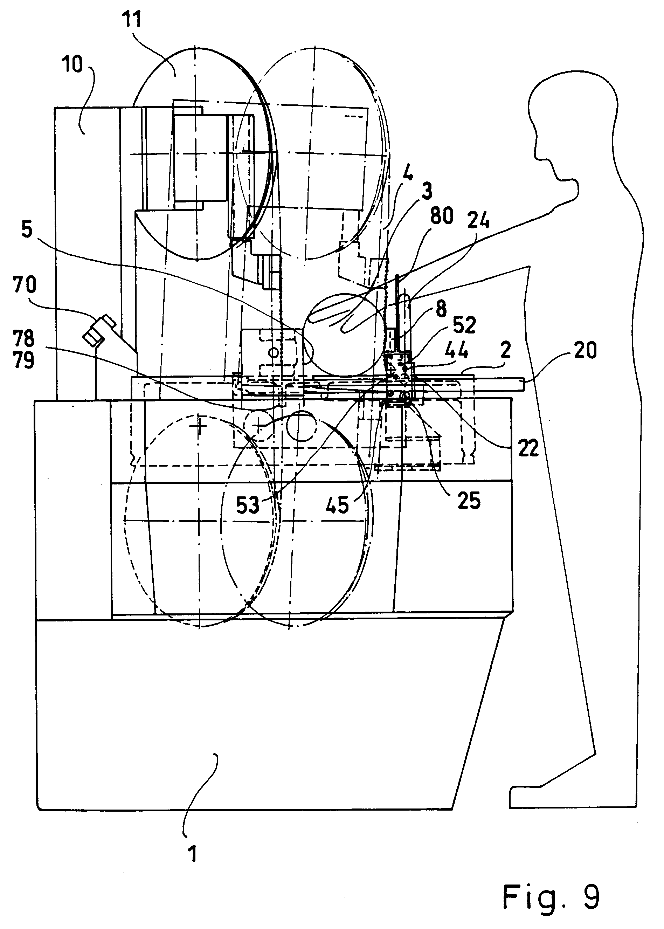

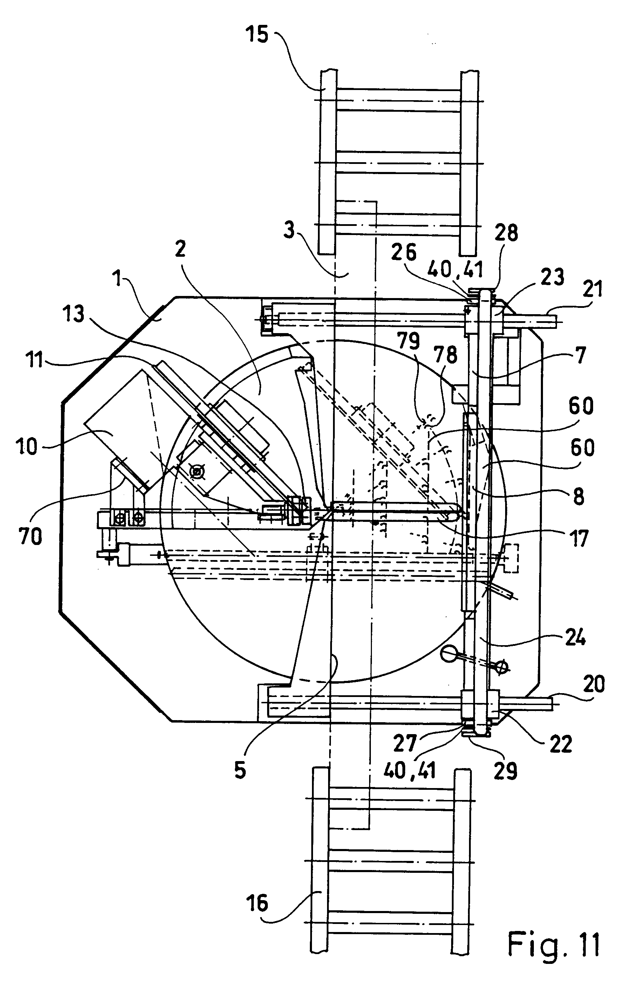

Zum Anlaufen gegen den Schaltarm 60 ist das Maschinenteil 10 beidseits des Sägebandes 4 mit Anschlagstiften 78, 79 (siehe insbesondere Fig. 4 und 9) ausgerüstet, die dafür sorgen, daß bei jeder möglichen Gehrungseinstellung der Schnittebene 17 des Sägebandes 4 eine Kollision des Sägebandes mit der Spannbacke 8 vermieden ist. Einige in dieser Richtung denkbare Fälle sind in gestrichelter Ausführung aus der Darstellung gemäß Fig. 11 ersichtlich, wo ausgehend von der ausgezeichneten Darstellung der Schnittebene 17 zu beiden Seiten hingehende Schwenkwinkel der Schnittebene und die dazu gehörenden Anlaufpositionen der Anschlagstifte 78, 79 mit dem Schaltarm 60 dargestellt sind.

Fig. 9 zeigt noch einmal die bisher im einzelnen beschriebene Vertikalbandsäge in Seitenansicht etwa entsprechend Fig. 5, wobei das Maschinenteil 10 in der Stellung zu Beginn des sägenden Arbeitsganges und zum Ende des sägenden Arbeitsganges gezeigt ist.

Wie ersichtlich, kann das Maschinenteil 10 in Vorschubrichtung etwas gekippt werden mit Hilfe einer Kippvorrichtung 70, mit der das Maschinenteil 10 um eine an seiner Horizontalführung angeordnete Achse geschwenkt werden kann.

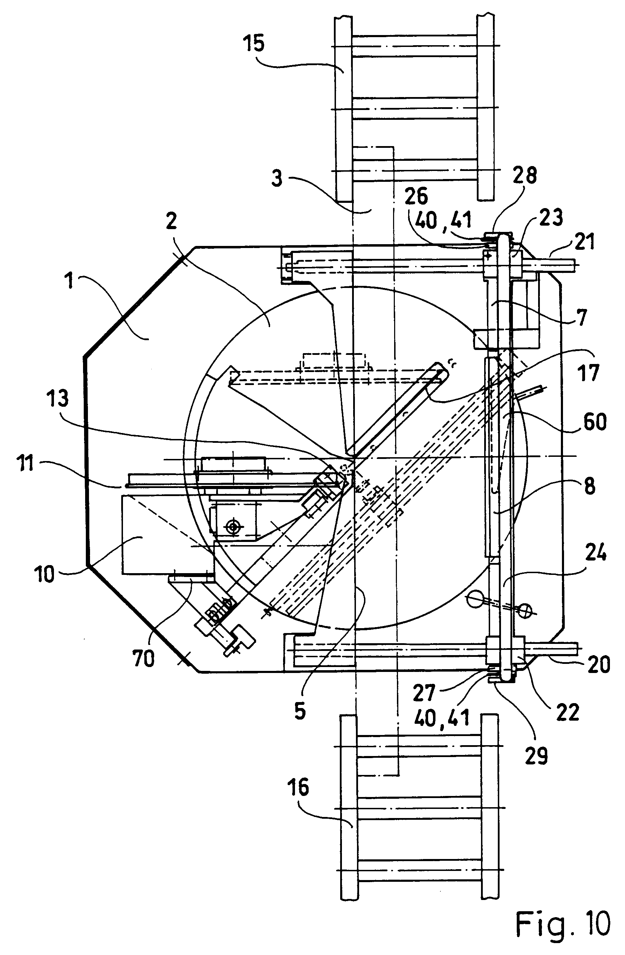

Ebenso zeigen die Fig. 10 und 11 in Draufsicht die Vertikalbandsäge in zwei verschiedenen Schwenkstellungen für eine derartige Ausbildung der Vertikalbandsäge, bei der das Maschinenteil 10 um eine aus Fig. 1 ersichtliche Vertikalachse 71 zusammen mit dem Drehtisch 2 schwenkbar ist, um am Werkstückmaterial 3 unterschiedliche Gehrungswinkel herzustellen. So zeigt Fig. 10 einen etwa unter 45° zum Vorschub des Werkstückmaterials 3 gelegenen Gehrungswinkel, während Fig. 11 eine quer zum Werkstückmaterial gelegene Schnittrichtung veranschaulicht zusammen mit unterschiedlichen, durch den Querschnitt des Werkstückmaterials bedingten Einstellungen des Schaltarmes 60.

Alle Figuren zeigen schließlich, daß der Griffbügel 24 in seiner Mitte mit einer Plexiglasscheibe 80 ausgestattet ist, die den Arbeitsbereich des Sägebandes gegen Hineingreifen durch die Bedienungsperson absichert, wobei jedoch auf der anderen Seite gleichzeitig eine Einsichtmöglichkeit in den Arbeitsbereich des Sägebandes 4 besteht.

Dazu ist die Plexiglassscheibe 80 so ausgebildet, daß sie den Griffbügel 24 im Arbeitsbereich des Sägebandes 4 nach oben überragt, so daß dort der Griffbügel von der Bedienungsperson nicht angefaßt werden kann. Auch ist die Plexiglasscheibe 80 unterhalb des Griffbügels soweit ausgedehnt, daß sie einen lückenlosen Anschluß an die Spannbacke 8 findet. Andererseits ist diese Plexiglasscheibe 80 nicht im Wege, wenn die Spannvorrichtung, wie beispielsweise aus Fig. 7 ersichtlich, für das Freihandsägen aus dem Oberflächenbereich des Maschinentisches gebracht ist.

## Patentansprüche

1. Vorrichtung zum horizontalen Spannen des auf einem Maschinentisch einer Vertikalsäge, insbesondere Vertikalbandsäge aufliegenden Werkstückmaterials, wobei die Spannvorrichtung eine feststehende, im wesentlichen vertikale und vorwiegend quer zur Vorschubrichtung des Sägebandes angeordnete Spannfläche für das Werkstückmaterial und eine dieser gegenüber horizontal verstellbare Spannbacke mit ebenfalls im wesentlichen vertikaler, zur feststehenden Spannfläche paralleler Spannfläche für das Werkstückmaterial aufweist,
dadurch gekennzeichnet,
daß die Spannbacke (8) als den Maschinentisch (2) übergreifende Spannbrücke (7) und ebenso die feststehende Spannfläche (5) den Maschinentisch unter Freilassung eines Durchtrittes (6) für das Sägeband (4) übergreifend ausgebildet ist, daß die beiden Enden der Spannbrücke (7) neben dem Maschinentisch horizontal senkrecht zur Ebene der Spannfläche verstellbar und feststellbar geführt sind, daß die Spannbrücke an den Führungen (20, 21) über Führungselemente (22, 23) verschiebbar und an den Führungselementen um eine zur Spannfläche parallele Kippachse (25) schwenkbar angelenkt ist, und daß an den Führungselementen und den Enden der Spannbrücke je eine durch eine Handhabe (24, 28, 29) verstellbare Spannvorrichtung (40, 41) drehbar angelenkt ist derart, daß bei einem Stellzustand der Spannvorrichtung die dem Spannzustand entsprechende Schwenkposition der Spannbrücke (7) gegen das Werkstückmaterial (3) gegeben ist, während beim anderen Stellzustand der Spannvorrichtung die Spannbrücke vom Werstückmaterial gelöst bzw. weggekippt ist.

2. Vorrichtung nach Anspruch 1,
dadurch gekennzeichnet,
daß jede Spannvorrichtung durch einen Kniehebel (40, 41) gebildet, der aus wenigstens zwei drehbar miteinander verbundenen Hebelarmen (40, 41) besteht, wobei die freien Enden der Hebelarme einerseits mit den Führungselementen (bei 43) und andererseits mit den Enden der Spannbrücke (7) (bei 42) drehbar verbunden sind.

3. Vorrichtung nach Anspruch 1,
dadurch gekennzeichnet,
daß die Handhaben (24, 28, 29) um eine zur Kippachse (25) parallele Achse, vorzugsweise um eine mit der Kippachse übereinstimmende Achse schwenkbar sind.

4. Vorrichtung nach Anspruch 1,
dadurch gekennzeichnet,
daß die Handhaben (24, 28, 29) durch einen zur Spannbrücke (7) parallelen Griffbügel (24) miteinander verbunden sind.

5. Vorrichtung nach Anspruch 1,
dadurch gekennzeichnet,
daß die Spannbrücke (7) die Führungselemente (22, 23) mit ihren Enden und an diesen angeordneten, zu den Führungen (20, 21) parallelen Wangen (28, 29) übergreift, wobei die Wangen die Kippachse (25) aufnehmen.

6. Vorrichtung nach Anspruch 2,
dadurch gekennzeichnet,
daß die Kniehebel (40, 41) über beidseits in ihren Schwenkweg ragende Stifte (44, 45) der Handhaben (24, 28, 29) in Strecklage bzw. aus der Strecklage bringbar sind.

7. Vorrichtung nach Anspruch 1,
dadurch gekennzeichnet,
daß die Führungselemente (22, 23) als Führungsklötze ausgebildet sind, die sich horizontal und senkrecht zu den Spannflächen (5, 9) erstreckende Führungsstangen (20, 21) umfassen, daß die Führungsklötze auf Seiten der Kippachse (25) unter Bildung von Klemmbacken (32, 33) parallel zu den Führungsstangen aufgeschlitzt sind und daß die Kippachsen als mit den Handhaben undrehbar verbundene Spannschrauben (30) zur lösbaren Klemmung der Führungsklötze auf den Führungsstangen ausgebildet sind, die in einer der Klemmbacken (32) frei drehbar und in Richtung auf die andere Klemmbacke (33) axial abgestützt sowie in der anderen Klemmbacke über einen Gewindeeingriff gelagert sind.

8. Vorrichtung nach Anspruch 7,
dadurch gekennzeichnet,
daß die Spannschrauben (30) mit ihrem Gewindeeingriff in den anderen Klemmbacken (33) über eine in diesen axial einstellbare Gewindehülse (51) drehbar gelagert sind.

9. Vorrichtung nach Anspruch 7,
dadurch gekennzeichnet,
daß die axiale Abstützung zwischen Spannschrauben (30) und der den Handhaben (28, 29) benachbarten Klemmbacken (32) über zwischengesetzte Federelemente (50) erfolgt.

10. Vorrichtung nach Anspruch 2,
dadurch gekennzeichnet,
daß die Schwenklagen der Kniehebel (40, 41) zwischen gestreckter und ungestreckter Lage durch in den Bewegungsbereich der Kniehebel ragende, von den Enden der Spannbrücke bzw. deren Wangen (28, 29) vorstehende Anschläge (52, 53) begrenzt sind.

11. Vorrichtung nach Anspruch 2,
dadurch gekennzeichnet,
daß die drehbare Anlenkung (43) der Kniehebel (40, 41) an den Führungselementen (22, 23) lösbar bzw. herausnehmbar ausgebildet ist.

12. Vorrichtung nach Anspruch 1 bzw. 11,
dadurch gekennzeichnet,
daß die Führungen (20, 21) der Spannbrücke (7) nebem dem Maschinentisch (2) und unterhalb der Tischfläche angeordnet sind derart, daß die Spannbrücke bei gelöster Anlenkung der Kniehebel an den Führungselementen (22, 23) um die Kippachse (25) in eine Position schwenkbar ist, bei der ihre Spannfläche (9) in der Oberflächenebene des Maschinentisches (2) liegt.

13. Vorrichtung nach Anspruch 1,
dadurch gekennzeichnet,
daß die Führungen bzw. Führungsstangen (20, 21) wenigstens mittelbar an einem Maschinengestell (1) der Vertikalbandsäge angeordnet sind.

14. Vorrichtung nach Anspruch 13,
dadurch gekennzeichnet,
daß die Führungen bzw. Führungsstangen (20, 21) am Maschinengestell (1) in Richtung ihrer Längserstreckung axial verschiebbar gelagert sind, und daß sie sich bezüglich dieser Verschiebelagerung in Richtung von der Spannbacke (8) fort unter Wirkung von am Maschinengestell (1) abgestützten, gegebenenfalls einstellbaren Federmitteln (56) in Anlage an einem durch das Maschinengestell gebildeten Anschlag (55) befinden.

15. Vorrichtung nach Anspruch 1,
dadurch gekennzeichnet,
daß die Spannbacke (8) wenigstens auf der die Spannfläche (9) aufweisenden Seite durch ein dickwandiges, austauschbares Verschleißprofil, insbesondere Aluminiumprofil gebildet ist.

16. Vorrichtung nach Anspruch 1,
dadurch gekennzeichnet,
daß an einem der Führungselemente (23) ein sich im wesentlichen horizontal erstreckender Schaltarm (60) gegebenenfalls schwenkbar angelenkt ist zur Vorschubbegrenzung bzw. -abschaltung für die Vertikalbandsäge, und daß der Schaltarm in den vorschubbedingten Bewegungsbereich des Sägebandes (4) bzw. eines das Sägeband umlaufend aufnehmenden, in Richtung auf das Werkstückmaterial (3) vorschiebbaren Maschinenteils (10) ragt.

17. Vorrichtung nach Anspruch 16,
dadurch gekennzeichnet,
daß das Maschinenteil (10) zum Anschlag an den Schaltarm (60) beidseits des Sägebandes (4) angeordnete Anschlagstifte (78, 79) aufweist.

18. Vorrichtung nach Anspruch 4,
dadurch gekennzeichnet,
daß der Griffbügel (24) im Bereich seiner Längsmitte eine zur Spannfläche (9) der Spannbacke (7) parallele Schutzscheibe (80) trägt, die den Griffbügel nach oben überragt.

## Revendications

1. Dispositif pour serrer horizontalement une pièce à traiter sur la table d'une scie verticale, notamment d'une scie à ruban verticale, dans lequel le dispositif de serrage possède une surface fixe et sensiblement verticale de serrage, disposée de façon prépondérante transversalement par rapport à la direction d'avance du ruban de scie, pour le serrage de la pièce et une mâchoire de serrage, qui est déplaçable horizontalement par rapport à cette surface et comporte une surface de serrage également sensiblement verticale, parallèle à la surface de serrage fixe, pour la pièce, caractérisé par le fait
que la mâchoire de serrage (8) est agencée sous la forme d'un étrier de serrage (7) qui s'engage au-dessus de la table (2) de la machine, et que, également, la surface de serrage fixe (5) est agencée de manière à s'étendre au-dessus de la table tout en laissant dégagé un passage (6) pour le ruban de scie (4), que les deux extrémités de l'étrier de serrage (7) sont guidées, de manière à pouvoir être déplacées et bloquées, horizontalement et perpendiculairement au plan de la surface latérale, à côté de la table, que l'étrier de serrage est articulé de manière à être déplaçable sur les guides (20,21) par l'intermédiaire d'éléments de guidage (22,23) et de manière à pouvoir pivoter sur les éléments de guidage autour d'un axe de basculement (25) parallèle à la surface de serrage, et que respectivement un dispositif de serrage (40,41), qui est déplaçable au moyen d'une manette (24,28,29), est articulé de manière à pouvoir pivoter, sur les éléments de guidage et sur les extrémités de l'étrier de serrage de sorte que, lorsque le dispositif de serrage est dans un état de réglage, la position pivotée, qui correspond à l'état de serrage, de l'étrier de serrage (7) contre la pièce (3) est déterminée alors que, lorsque le dispositif de serrage est dans son autre état de réglage, l'étrier de serrage est dégagé ou écarté de la pièce par basculement.

2. Dispositif selon la revendication 1, caractérisé en ce que chaque dispositif de serrage est formé par un levier à genouillère (40,41), qui est constitué par au moins deux bras de levier (40,41) raccordés entre eux de manière à pouvoir pivoter, les extrémités libres des bras de levier étant raccordées, de manière à pouvoir tourner, d'une part aux éléments de guidage (en 43) et d'autre part aux extrémités de l'étrier de serrage (7) (en 42).

3. Dispositif selon la revendication 1, caractérisé en ce que les manettes (24,28,29) peuvent pivoter autour d'un axe parallèle à l'axe de basculement (25), de préférence autour d'un axe coïncidant avec l'axe de basculement.

4. Dispositif selon la revendication 1, caractérisé en ce que les manettes (24,28,29) sont réunies entre elles par une traverse de préhension (24) parallèle à l'étrier de serrage (7).

5. Dispositif selon la revendication 1, caractérisé en ce que l'étrier de serrage (7) s'engage par ses extrémités au-dessus des éléments de guidage (22,23) et au-dessus de flasques (28,29) installés sur ces éléments de guidage et parallèles aux guides (20,21), les flasques supportant l'axe de basculement (25).

6. Dispositif selon la revendication 2, caractérisé en ce que les leviers à genouillère (40,41) peuvent être amenés dans ou retirés de leur position déployée, par l'intermédiaire de tiges (44,45), qui font saillie des deux côtés sur la course de pivotement des leviers, des manettes (24,28,29).

7. Dispositif selon la revendication 1, caractérisé en ce que les éléments de guidage (22,23) sont réalisés sous la forme de sabots de guidage, qui enserrent des barres de guidage (20,21), qui s'étendent horizontalement et perpendiculairement aux surfaces de serrage (5,9), que les sabots de guidage sont fendus parallèlement aux barres de guidage, du côté des axes de basculement (25), en formant des mâchoires de serrage (32,33), et que les axes de basculement sont réalisés sous la forme de vis de serrage (30), qui sont raccordées avec blocage en rotation aux manettes et servent à réaliser un blocage, pouvant être supprimé, des sabots de guidage sur les barres de guidage, ces vis étant montées de manière à pouvoir tourner librement dans l'une des mâchoires de serrage (32) et prenant appui axialement en direction de l'autre mâchoire de serrage (33) et étant supportées dans cette mâchoire par l'intermédiaire d'un engrènement par vissage.

8. Dispositif selon la revendication 7, caractérisé en ce que les vis de serrage (30) sont montées de manière à pouvoir tourner, au moyen de leur engrènement par vissage dans les autres mâchoires de serrage (33) par l'intermédiaire d'une douille filetée (51) réglable axialement dans ces mâchoires.

9. Dispositif selon la revendication 7, caractérisé en ce que le soutien axial entre les vis de serrage (30) et les mâchoires de serrage (32) voisines des m anettes (28,29) est réalisé par l'intermédiaire d'éléments de ressort intercalés (50).

10. Dispositif selon la revendication 2, caractérisé en ce que les positions de pivotement des leviers coudés (40,41) entre une position déployée et une position non déployée sont limitées par des butées (52,53), qui pénètrent dans la zone de déplacement des leviers coudés et font saillie à partir des extrémités de l'étrier de serrage ou de ses flasques (28,29).

11. Dispositif selon la revendication 2, caractérisé en ce que l'articulation rotative (43) des leviers à genouillère (40,41) sur les éléments de guidage (22,23) est agencée de manière à être amovible ou à pouvoir être retirée.

12. Dispositif selon la revendication 1 ou 11, caractérisé en ce que les guides (20,21) de l'étrier de serrage (7) sont disposés à côté de la table (2) et au-dessus de cette table de telle sorte que lorsque l'articulation des leviers à genouillère sur les éléments de guidage (22,23) est supprimée, l'étrier de serrage peut venir par pivotement, autour de l'axe de basculement (25), dans une position dans laquelle sa surface de serrage (9) est située dans le plan de la surface de la table (2).

13. Dispositif selon la revendication 1, caractérisé en ce que les guides ou les barres de guidage (20,21) sont disposés au moins directement sur un bâti (1) de la scie à ruban verticale.

14. Dispositif selon la revendication 13, caractérisé en ce que les guides ou les barres de guidage (20,21) sont montés sur le bâti (1) de la machine de manière à être déplaçables axialement dans la direction longitudinale du bâti et qu'en rapport avec ce soutien mobile en direction de la mâchoire de serrage (8), ils sont appliqués contre une butée (55) formée par le bâti de la machine, sous l'action de moyens formant ressorts (56) éventuellement réglables, qui prennent appui sur le bâti (1) de la machine.

15. Dispositif selon la revendication 1, caractérisé en ce que la mâchoire de serrage (8) est formée, au moins sur le côté portant la surface de serrage (9), par un profilé d'usure à paroi mince remplaçable, notamment un profilé en aluminium.

16. Dispositif selon la revendication 1, caractérisé en ce que sur l'un des éléments de guidage (23) est articulé, éventuellement de manière à pouvoir pivoter, un bras de commutation (60) qui s'étend sensiblement horizontalement et sert à limiter ou interrompre l'avance pour la scie à ruban verticale, et que le bras de commutation pénètre dans la zone de déplacement, conditionnée par l'avance, du ruban de scie (4) ou d'une partie (10) de la machine qui reçoit circonférentiellement le ruban de scie.

17. Dispositif selon la revendication 16, caractérisé en ce que la partie (10) de la machine destinée à venir en butée contre le bras de commutation (60) possède des tiges de butée (78,79) disposées des deux côtés du ruban de scie (4).

18. Dispositif selon la revendication 4, caractérisé en ce que la traverse de préhension (24) porte, au niveau de sa partie médiane dans le sens de la longueur, un disque de protection (80), qui s'engage au-dessus de la traverse de préhension.

## Claims

1. Apparatus for the horizontal clamping of the workpiece material resting on a supporting table of a vertical saw, especially a vertical band saw, the clamping apparatus comprising a stationary clamping face for the workpiece material, which clamping face is substantially vertical and is arranged predominantly transversely to the direction of advance of the band saw, and a clamping jaw which is horizontally adjustable with respect to that clamping face and likewise comprises a substantially vertical clamping face for the workpiece material, which clamping face is parallel to the stationary clamping face, characterised in that the clamping jaw (8) is constructed as a clamping bridge (7) extending over the supporting table (2) and, likewise, the stationary clamping face (5) is constructed to extend over the supporting table in such a manner that it leaves open a passage (6) for the band saw (4), the two ends of the clamping bridge (7) near the supporting table are so supported that they can be adjusted horizontally and perpendicularly to the plane of the clamping faces and secured in position, the clamping bridge can be displaced on the guides (20, 21) by means of guide members (22, 23) and is articulated to the guide members to be pivotable about a tilting axis (25) parallel to the clamping face, and a respective clamping device (40, 41) that can be adjusted by a handle (24, 28, 29) is so rotatably articulated to each of the guide members and to each end of the clamping bridge that, in the case of one adjusted state of the clamping device, the pivot position, corresponding to the clamping state, of the clamping bridge (7) against the workpiece material (3) is established, while, in the case of the other adjusted state of the clamping device, the clamping bridge is released or tilted away from the workpiece material.

2. Apparatus according to claim 1, characterised in that each clamping device is formed by a knee lever (40, 41) which comprises at least two lever arms (40, 41) which are rotatably connected to one another, the free ends of the lever arms being rotatably connected on the one hand to the guide members (at 43) and, on the other hand, to the ends of the clamping bridge (7) (at 42).

3. Apparatus according to claim 1, characterised in that the handles (24, 28, 29) are pivotable about an axis parallel to the tilting axis (25), preferably about an axis that coincides with the tilting axis.

4. Apparatus according to claim 1, characterised in that the handles (24, 28, 29) are connected to one another by a bow-shaped grip piece (24) parallel to the clamping bridge (7).

5. Apparatus according to claim 1, characterised in that the clamping bridge (7) extends over the guide members (22, 23) with its ends and with side pieces (28, 29) arranged on those ends parallel to the guides (20, 21), the side pieces accommodating the tilting axis (25).

6. Apparatus according to claim 2, characterised in that the toggle levers (40, 41) can be brought into the extended position and out of the extended position by means of pins (44, 45) of the handles (24, 28, 29), which pins project on both sides into the pivot path of the knee levers.

7. Apparatus according to claim 1, characterised in that the guide members (22, 23) are in the form of guide blocks that surround guide rods (20, 21) extending horizontally and perpendicularly to the clamping faces (5, 9), the guide blocks have a slot, on the side where the tilting axis (25) is located, forming gripping jaws (32, 33) parallel to the guide rods, and the tilting axes are in the form of clamping screws (30) connected in a non-rotatable manner to the handles for the releasable clamping of the guide blocks on the guide rods, which screws are freely rotatable in one of the gripping jaws (32) and are supported axially in the direction towards the other gripping jaw (33) and are mounted in the other gripping jaw by means of a threaded engagement.

8. Apparatus according to claim 7, characterised in that the clamping screws (30) are rotatably mounted with their threaded engagement in the other gripping jaws (33) by means of a threaded sleeve (51) which is axially adjustable therein.

9. Apparatus according to claim 7, characterised in that the axial support between the clamping screws (30) and the gripping jaws (32) adjacent to the handles (28, 29) is effected by means of interpolated spring members (50).

10. Apparatus according to claim 2, characterised in that the pivot positions of the toggle levers (40, 41) between the extended and unextended position are delimited by stops (52, 53) that project into the area of movement of the knee levers and protrude from the ends of the clamping bridge or the side pieces (28, 29) thereof.

11. Apparatus according to claim 2, characterised in that the rotatable articulation (43) of the toggle levers (40, 41) to the guide members (22, 23) is in such a form that it can be released or taken out.

12. Apparatus according to claim 1 or claim 11, characterised in that the guides (20, 21) of the clamping bridge (7) are so arranged adjacent to the supporting table (2) and below the face of the table that the clamping bridge, when the articulation of the toggle levers to the guide members (22, 23) is released, can be pivoted about the tilting axis (25) into a position in which its clamping face (9) lies in the surface plane of the supporting table (2).

13. Apparatus according to claim 1, characterised in that the guides or guide rods (20, 21) are arranged at least indirectly on a machine stand (1) of the vertical band saw.

14. Apparatus according to claim 13, characterised in that the guides or guide rods (20, 21) are mounted on the machine stand (1) to be axially displaceable in the direction of their longitudinal extension and that, with regard to this displacement mounting, in the direction away from the clamping jaw (8), they abut a stop (55) formed by the machine stand under the action of, optionally adjustable spring means (56) supported on the machine stand (1).

15. Apparatus according to claim 1, characterised in that the clamping jaw (8) is formed, at least on the side having the clamping face (9), by a thick-walled, exchangeable wear facing piece, especially an aluminium facing piece.

16. Apparatus according to claim 1, characterised in that a substantially horizontally extending switching arm (60) is articulated, optionally in pivotable manner, to one of the guide members (23) in order to limit or switch off the advance of the vertical band saw and the switching arm projects into the area of movement, governed by the advance, of the band saw (4) or of a machine part (10) that extends round and accommodates the band saw and that can be pushed forwards in the direction towards the workpiece material (3).

17. Apparatus according to claim 16, characterised in that, for the purpose of striking against the switching arm (60), the machine part (10) has stop pins (78, 79) arranged on both sides of the band saw (4).

18. Apparatus according to claim 4, characterised in that the bow-shaped grip piece (24) carries in the area of its longitudinal centre a protective plate (80) that is parallel to the clamping face (9) of the clamping jaw (8) and projects above the bow-shaped grip piece.
